Europäisches Patentamt

**European Patent Office**

Office européen des brevets

(19)

(11) Publication number: **0 211 969**
**B1**

# EUROPEAN PATENT SPECIFICATION

(45) Date of publication of the patent specification:
**10.01.90**

(21) Application number: **85109793.1**

(22) Date of filing: **05.08.85**

(51) Int. Cl.⁴: **B60S 1/44**

(54) **Improvements relating to windscreen wipers.**

(43) Date of publication of application:
**04.03.87 Bulletin 87/10**

(45) Publication of the grant of the patent:
**10.01.90 Bulletin 90/2**

(84) Designated Contracting States:
**BE DE FR IT NL SE**

(56) References cited:
**CH-A- 469 582**
**DE-C- 834 054**
**GB-A- 357 063**
**GB-A- 1 440 872**
**GB-A- 2 154 861**
**US-A- 2 246 740**
**US-A- 2 607 066**
**US-A- 3 648 323**

**The file contains technical information submitted after the application was filed and not included in this specification**

(73) Proprietor: **THOMPSON DEVELOPMENT ENGINEERING LIMITED, Unit 53 Telford Industrial Estate Stafford Park 4, Telford Shropshire TF3 3BA(GB)**

(72) Inventor: **Thompson, Geoffrey Raynor, The Coach House Church Road, Tettenhall Wood Wolverhampton, WV6 8NQ(GB)**

(74) Representative: **Lally, William et al, FORRESTER & BOEHMERT Widenmayerstrasse 4/I, D-8000 München 22(DE)**

## Description

This invention is concerned with improvements relating to windscreen wipers.

The problems of keeping vehicle windscreens clear of water during heavy rain on crowded motorways are well known to drivers.

Conventional windscreen wiper assemblies comprise one or more blades which are reciprocable so as to sweep from side to side across a windscreen to clear moderate accumulations of water from the windscreen. However, during conditions such as heavy rain, and particularly on crowded relatively high-speed roads e.g. motorways, in order to clear the screen adequately it is necessary to reciprocate the blades at very high speeds at which they may distract the driver and/or be excessively noisy so as to impair safety and comfort, and such speeds can lead to premature breakage of the wiper system. In some cases, the highest available speed of reciprocation may not be adequate for clearing water from the windscreen at a rate sufficient to permit safe driving.

It is known (e.g. GB-A 357 063) to provide a carrier assembly which extends in front of the windscreen, and which carries a blade assembly mounted for rotary movement. The carrier assembly may be stationary, or may reciprocate (move back and forwards) as the blade assembly rotates, both movements being produced by a single drive means. Despite the fact that such mechanisms have been known for many, many years, they have not provided a satisfactory solution to the problem with which the present invention is concerned.

It is an object of this invention to provide a new and improved windscreen wiper assembly, which reduces significantly the problem set out in the last preceding paragraph but one.

According to this invention there is provided a windscreen wiper assembly comprising a carrier assembly adapted to be mounted on a vehicle for pivotal movement across the windscreen of the vehicle, a blade assembly mounted on the carrier assembly, and drive means operative to cause reciprocating movement of the carrier assembly to cause the blade assembly to sweep across the windscreen, and to cause rotary movement of the blade assembly (18) relative to the carrier assembly, characterised in that the drive means comprises first and second individually operative drive mechanisms, and the wiper system comprises selection means operative either to actuate the first drive mechanism to cause the carrier assembly to reciprocate at a relatively low speed whilst the second drive mechanism is inoperative to cause rotation of the blade assembly; or to actuate the second drive mechanism to cause the blade assembly to be rotated at a relatively high speed relative to the carrier assembly whilst the first drive mechanism is inoperative to cause reciprocation of the carrier assembly.

The selection means may be such that it may be moved from a first position in which neither of the drive mechanisms are operating to a second position in which the first drive mechanism is operated, and to a third position in which operation of the first drive mechanism is terminated and operation of the second drive mechanism is commenced.

Thus, with the selection means in its second position, the wiper assembly may operate in a conventional manner, sweeping from side to side across the windscreen to clear therefrom moderate accumulations of water. On driving into conditions leading to very heavy accumulations of rain water, the selection means may be moved to its third position. Whilst in said third position, operation of the blade assembly may not be effective to clear as great an area of the windscreen as when operating in its normal mode, the readiness with which the blade assembly may be rotated at high speed, compared with the aforementioned difficulties of reciprocation of a conventional blade assembly, allows a considerable improvement to be achieved in poor visibility. A smoothly rotating blade can be less distracting, and less noisy, than a reciprocating blade, and is not subjected to potentially damaging sudden changes of direction.

However, where in conventional manner the vehicle is provided with two such wiper assemblies, desirably the two blade assemblies when the selection means is in its third position are synchronously driven, allowing the areas cleared by the respective blade assemblies to overlap.

Desirably the construction and arrangement is such that changeover from the reciprocating to the rotational mode is effected with minimal intervening delay. Preferably, however, on movement of the selection means to its third position such changeover is not effected until the carrier assemblies have reached an optimum position, which will conventionally be a mean position which allows, on commencement of rotation of the blade assemblies, a maximum useful area clearance.

Since the conditions under which the wiper assembly will be returned to its reciprocating mode will be less stringent, recommencement of reciprocatory motion of the blade assembly on return of the selection means to its second position may be delayed until the blade assemblies have at least substantially ceased rotary motion and/or returned to their normal positions relative to the carrier assemblies.

However, if desired rotational movement of the blade assembly may be braked to enable changeover to be effected speedily.

According to this invention, there is also provided a method of operating the windscreen wipers of a vehicle, involving the use of a windscreen wiper assembly in accordance with this invention, in which drive mechanism is utilised to cause conventional reciprocating motion of the wipers during moderately heavy rain, and upon conditions of heavy rain reciprocation of the wipers is ceased, and rotational motion of the wipers is commenced.

According to this invention, there is also provided a vehicle comprising a wiper assembly as hereinbefore described.

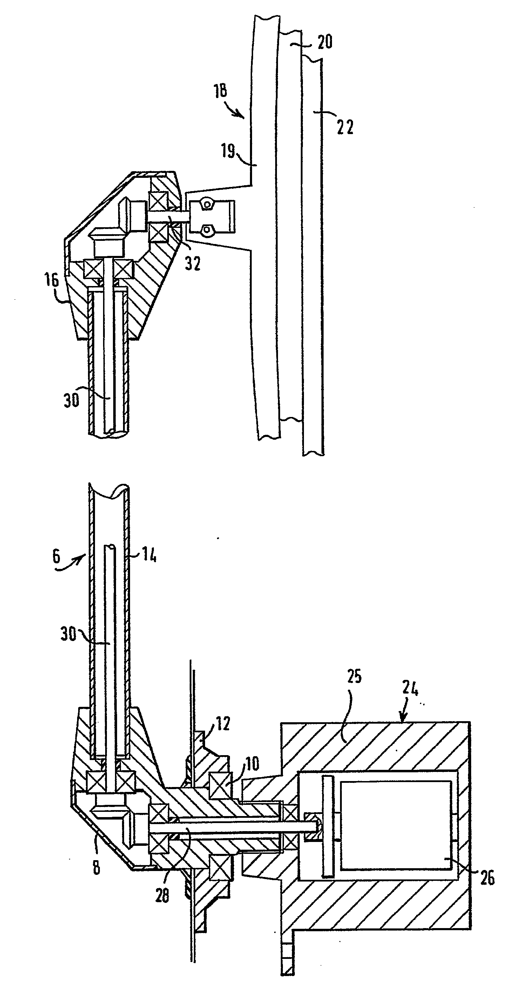

The invention will become more clear from the following detailed description, to be read with reference to the accompanying drawing which is a schematic illustration of an embodiment of the invention.

The embodiment of the invention shown in the accompanying drawing is a windscreen wiper assembly for mounting on a vehicle such as a car. It will of course be appreciated that it is a common practice to utilise two such wiper assemblies on a vehicle, the wiper assemblies being mounted side by side.

The wiper assembly comprises a carrier assembly 6, comprising a lower housing 8 mounted for rotational movement between bearings 10 in a mounting fixture 12 secured to the interior of a panel of the vehicle. Extending upwardly from the housing 8 is an elongate arm 14, which carries at its upper end an upper housing 16. Carried by the housing 16 is a blade assembly 18, comprising an elongate supporting member 19, which carries a blade 20, which may conveniently be of rubber, urged by spring means (not shown) into contact with the windscreen 22 in a conventional manner.

The wiper assembly comprises first drive means (not shown) which is operated by an electromechanical/solid state/microelectronic control device (also not shown) to move the lower housing 8 backwards and forwards about the longitudinal axis provided by the bearings 10, to carry the blade assembly 18 backwards and forwards across the windscreen 22 in conventional reciprocating manner.

The control device also controls the operation of a second drive means 24 comprising a motor 26, which is adapted to rotate drive shaft 28, drive shaft 30 and drive shaft 32, to rotate the blade assembly 18 about the longitudinal axis of the drive shaft 32.

A stator housing 25 of the second drive means 24 is irrotationally connected to the lower housing 8, so that the entire second drive means 24 and the carrier assembly 6 are reciprocated together under action of the first drive means.

A gearbox (not shown) of the first drive means acts on the housing 25 in order to cause such reciprocation.

The control device includes selection means comprising a control member movable from a first position, in which the first and second drive means are inoperative, and the blade assembly is at rest in its normal inoperative position, to a second position, in which the first drive means operates to reciprocate the housing 8, and move the blade assembly backwards and forwards in an oscillatory motion across the windscreen in a conventional manner. On movement of the control member to a third position thereof, operation of the first drive means is terminated, and operation of the drive motor 26 is commenced to rotate the blade assembly 18 about the axis of the drive shaft 32.

The control device also comprises a control means which is operative, on movement of the control member from its second position to its third position, to delay activation of the drive motor 26 until the carrier assembly 6 has been moved into a mean position, which is one in which the longitudinal axis of the drive shaft 32 is generally in alignment with the driving position of the vehicle, such mean position being an optimum position for clearing of the windscreen by rotation of the blade, and for example being sensed by a limit/proximity device operative to terminate movement of the first drive means when the mean position is reached. On such termination of movement of the first drive means, operation of the second drive means 24 is initiated without delay.

In this manner, the first drive means may be operated to cause the wiper assembly to clear the windscreen under conditions of moderate rainfall, whilst the second drive means may be utilised to rotate the blade assembly 18 at high speed, to clear the windscreen under conditions of heavy rainfall and hence facilitate safe driving through heavy rain. A blade rotating at high speed can be less distracting, and less noisy, than a blade reciprocating at high speed, and is not subjected to potentially damaging sudden changes of direction such as those experienced by a high speed reciprocating blade.

It will be appreciated that on most vehicles, two such wiper assemblies will be provided side by side on the vehicle, the first drive means of each being synchronised so as to be in phase in conventional manner, and the second drive means 24 of each advantageously being synchronised in a manner which avoids contact between the blades in any region of overlap which may be present between areas over which the respective blades operate when using the second drive means, for example by introducing a phase difference (e.g. about 90°) between the blades. Such a phase difference may be achieved by introducing a time delay into initiation of rotation of one of the blades.

On movement of the control member from its third to its second position, advantageously rotation of the drive motor ceases without undue delay, preferably the construction and switching arrangement being such that this happens with the blade assemblies 18 becoming stationary (e.g. by being physically stopped) in their normal upright positions, which are the optimum positions of the blade assemblies relative to the carrier assemblies for clearing of the windscreen by reciprocation, whereupon operation of the first drive means may automatically recommence to reciprocate the assemblies in conventional manner.

Whilst in the preferred embodiment rotational movement of the blade assembly is effected by one or more hollow members, if desired, this may be effected by the use of a flexible cable drive or other means.

Where the control member is capable of occupying more than one position in which the blade assembly is caused to reciprocate (e.g. at a different speed for each such position), any such position may, if appropriate, be regarded as the aforesaid "second position" in relation to this invention.

For example, the control member may comprise a switching "stalk" on the vehicle's steering column, having a first position in which the wiper assembly is "parked" and from which the "stalk" is movable, either downwards to an "intermittent reciprocation" position, or upwards to any of a plurality of positions in which the assembly reciprocates at progressively higher speed (at least the highest-speed-reciprocation position constituting a "second position"), and thence further upwards to a "third position" in which reciprocation ceases and rotation of the blade commences.

The windscreens of many vehicles are curved, and if desired the wiper assembly may be provided with suitable resilient and/or pivotal and/or universal-joint-type connections between its components, to enable the blade to follow the curvature of the screen during reciprocation and/or rotation.

If desired, motors of the second drive means may alternatively be outwardly mounted on the respective carrier assemblies 6 e.g. at positions currently occupied by the housings 16, so as to act more directly on the respective blade assemblies 18.

If desired, drive motors may be shared by the wiper assemblies, the motors and assemblies being linked by belt drives, for example.

## Claims

1. A windscreen wiper assembly comprising:
(a) a carrier assembly (6) adapted to be mounted on a vehicle for pivotal movement across the windscreen (22) of the vehicle;
(b) a blade assembly (18) mounted on the carrier assembly (6); and
(c) drive means operative to cause reciprocating movement of the carrier assembly (6) to cause the blade assembly (18) to sweep across the windscreen (22) and to cause rotary movement of the blade assembly (18) relative to the carrier assembly, characterised in that the drive means comprises first and second individually operative drive mechanisms, and the wiper system comprises selection means operative either
(1) to actuate the first drive mechanism to cause the carrier assembly (6) to reciprocate at a relatively low speed whilst the second drive mechanism (24) is inoperative to cause rotation of the blade assembly (18); or
(2) to actuate the second drive mechanism (24) to cause the blade assembly (18) to be rotated at a relatively high speed relative to the carrier assembly (6) whilst the first drive mechanism is inoperative to cause reciprocation of the carrier assembly (6).

2. A windscreen wiper assembly according to Claim 1 wherein the selection means is such that it may be moved from a first position in which neither of the drive mechanisms are operating, to a second position in which the first drive mechanism is operated, and to a third position in which operation of the first drive mechanism is terminated and operation of the second drive mechanism (24) is commenced.

3. A windscreen wiper assembly according to Claim 2 wherein the construction and arrangement is such that changeover from the reciprocating to the rotational mode is effected with minimal intervening delay.

4. A windscreen wiper assembly according to one of Claims 2 and 3 wherein on movement of the selection means to its third position such changeover is not effected until the carrier assembly (6) has reached an optimum position.

5. A windscreen wiper assembly according to any one of Claims 2, 3 and 4 wherein recommencement of reciprocatory motion of the carrier assembly (6) on return of the selection means to its second position is delayed until the blade assembly (18) has at least substantially ceased rotary motion and/or is returned to a normal position relative to the carrier assembly.

6. A windscreen wiper assembly according to any one of Claims 2 to 5 wherein on movement of the selection means to its second position rotational movement of the blade assembly (16) ceases at an optimum position of the blade assembly relative to the carrier assembly (6) for clearing of the windscreen by reciprocation.

7. A vehicle comprising a windscreen wiper assembly according to any one of the preceding claims.

8. A vehicle according to Claim 7 comprising two such wiper assemblies, the blade assemblies when the selection means is in its third position being synchronously driven.

9. A method of operating the windscreen wiper assembly of a vehicle, involving the use of a windscreen wiper assembly according to any one of Claims 1 to 6, in which drive mechanism is utilised to cause conventional reciprocating motion of the wiper assembly during moderately heavy rain, and upon conditions of heavy rain reciprocation of the wiper assembly is ceased, and rotational motion of the blade assembly (18) is commenced.

## Patentansprüche

1. Windschutzscheibenwischerbaugruppe mit:
a) einer Trägerbaugruppe (6), die so an einem Fahrzeug angebracht ist, daß eine Schwenkbewegung über die Windschutzscheibe (22) des Fahrzeugs ausgeführt werden kann;
b) Wischerblattbaugruppe (18), die an der Trägerbaugruppe (6) angebracht ist; und
c) Antriebsmittel, die so betrieben werden, daß sie eine Hin- und Herbewegung der Trägerbaugruppe (6) bewirken, um zu bewirken, daß die Wischerblattbaugruppe (18) über die Windschutzscheibe (22) streicht, und daß sie eine Drehbewegung der Wischerblattbaugruppe (18) relativ zur Trägerbaugruppe bewirken, dadurch gekennzeichnet, daß die Antriebsmittel erste und zweite, einzeln zu betreibende Antriebsmechanismen umfassen und das Wischersystem Auswahlmittel umfaßt, die so betrieben werden, daß sie entweder
(1) den ersten Antriebsmechanismus betätigen, um zu bewirken, daß die Trägerbaugruppe (6) sich mit einer relativ niedrigen Geschwindigkeit hin- und herbewegt, während der zweite Antriebsmechanismus (24) nicht betriebsbereit ist, um eine Drehung der Wischerblattbaugruppe (18) zu bewirken; oder
(2) den zweiten Antriebsmechanismus (24) betätigen, um zu bewirken, daß die Wischerblattbaugruppe (18) mit einer relativ hohen Geschwindigkeit relativ zur Trägerbaugruppe (6) gedreht wird, während der erste Antriebsmechanismus nicht betriebsbereit ist, um die Hin- und Herbewegung der Trägerbaugruppe (6) zu bewirken.

2. Windschutzscheibenwischerbaugruppe nach Anspruch 1, dadurch gekennzeichnet, daß das Auswahlmittel der Art ist, daß es aus einer ersten Stellung, in der keiner der Antriebsmechanismen betrieben wird, in einer zweite Stellung, in der der erste Antriebsmechanismus betrieben wird, und in eine dritte Stellung, in der der Betrieb des ersten Antriebsmechanismus beendet wird und der Betrieb des zweiten Antriebsmechanismus (24) begonnen wird, bewegt werden kann.

3. Windschutzscheibenwischerbaugruppe nach Anspruch 2, dadurch gekennzeichnet, daß die Bauweise und Anordnung der Art ist, daß der Wechsel vom Hin- und Her- zum Drehbetrieb mit minimaler Verzögerung dazwischen vollzogen wird.

4. Windschutzscheibenwischerbaugruppe nach einem der Ansprüche 2 und 3, dadurch gekennzeichnet, daß bei Bewegung des Auswahlmittels in seine dritte Stellung ein solcher Wechsel nicht vollzogen wird, bis die Trägerbaugruppe (6) eine optimale Stellung erreicht hat.

5. Windschutzscheibenwischerbaugruppe nach einem der Ansprüche 2, 3 und 4, dadurch gekennzeichnet; daß der Wiederbeginn der Hin- und Herbewegung der Trägerbaugruppe (6) bei Rückkehr des Auswahlmittels in seine zweite Stellung verzögert wird, bis die Wischerblattbaugruppe (18) zumindest im wesentlichen die Drehbewegung beendet hat und/oder in eine Normalstellung relativ zur Trägerbaugruppe zurückgekehrt ist.

6. Windschutzscheibenwischerbaugruppe nach einem der Ansprüche 2 bis 5, dadurch gekennzeichnet, daß bei Bewegung des Auswahlmittels in seine zweite Stellung die Drehbewegung der Wischerblattbaugruppe (18) bei einer optimalen Stellung der Wischerblattbaugruppe relativ zur Trägerbaugruppe (6) für die Säuberung der Windschutzscheibe durch Hin- und Herbewegung endet.

7. Fahrzeug mit einer Windschutzscheibenwischerbaugruppe nach einem der vorangehenden Ansprüche.

8. Fahrzeug nach Anspruch 7, gekennzeichnet durch zwei derartige Wischerbaugruppen, wobei die Wischerblattbaugruppen synchron angetrieben werden, wenn das Auswahlmittel in seiner dritten Stellung ist.

9. Verfahren zum Betreiben der Windschutzscheibenwischerbaugruppe eines Fahrzeugs, einschließlich der Verwendung einer Windschutzscheibenwischerbaugruppe nach einem der Ansprüche 1 bis 6, dadurch gekennzeichnet, daß der Antriebsmechanismus so verwendet wird, daß er während mittelstarken Regens eine herkömmliche Hin- und Herbewegung der Wischerbaugruppe bewirkt und unter Bedingungen starken Regens die Hin- und Herbewegung der Wischerbaugruppe beendet und eine Drehbewegung der Wischerblattbaugruppe (18) begonnen wird.

**Revendications**

1. Un ensemble d'essuie-glace de pare-brise comprenant:
(a) un ensemble porteur (6) apte à être monté sur un véhicule en vue d'un déplacement en pivotement transversal au pare-brise (22) du véhicule;
(b) un ensemble de lame (18) monté sur l'ensemble porteur (6); et
(c) des moyens d'entraînement fonctionnant pour provoquer un déplacement en va-et-vient de l'ensemble porteur (6) pour amener l'ensemble (18) de lame à balayer transversalement le pare-brise (22) et à provoquer le déplacement en rotation de l'ensemble de lame (18) par rapport à l'ensemble porteur, caractérisé en ce que les moyens d'entraînement comprennent un premier et un deuxième mécanismes d'entraînement fonctionnant de façon individuelle, et en ce que le système d'essuie-glace comprend des moyens de choix fonctionnant soit
(1) pour actionner le premier mécanisme d'entraînement pour amener l'ensemble porteur (6) à se déplacer en va-et-vient à une vitesse relativement faible tandis que le deuxième mécanisme d'entraînement (24) ne fonctionne pas pour provoquer la rotation de l'ensemble (18) de lame; soit
(2) pour actionner le deuxième mécanisme d'entraînement (24) pour amener l'ensemble de lame (18) à tourner à une vitesse relativement élevée par rapport à l'ensemble porteur (6) tandis que le premier mécanisme d'entraînement ne fonctionne pas pour provoquer le déplacement en va-et-vient de l'ensemble porteur (6).

2. Un ensemble d'essuie-glace pour pare-brise selon la revendication 1 dans lequel le moyen de choix est tel qu'il peut être déplacé depuis une première position, dans laquelle aucun des mécanismes d'entraînement ne fonctionne, vers une deuxième position, dans laquelle le premier mécanisme d'entraînement est mis en œuvre, et vers une troisième position, dans laquelle le fonctionnement du premier mécanisme d'entraînement cesse et le fonctionnement du deuxième mécanisme d'entraînement (24) commence.

3. Un ensemble d'essuie-glace pour pare-brise selon la revendication 2 dans lequel la structure et la disposition sont telles que le passage depuis le mode en va-et-vient vers le mode en rotation soit effectué avec un délai d'intervention minimal.

4. Un ensemble d'essuie-glace pour pare-brise selon l'une des revendications 2 et 3 dans lequel, lorsque l'on déplace les moyens de choix vers leur troisième position, ce passage n'est pas effectué avant que l'ensemble porteur (6) n'ait atteint une position optimale.

5. Un ensemble d'essuie-glace pour pare-brise selon l'une quelconque des revendications 2, 3 et 4 dans lequel, lorsque l'on ramène le moyen de choix dans sa deuxième position, la reprise par l'ensemble porteur (6) de son déplacement en va-et-vient est retardée jusqu'à ce que l'ensemble de lame (18) ait au moins sensiblement cessé son mouvement de rotation et/ou qu'il soit retourné à une position normale par rapport à l'ensemble porteur.

6. Un ensemble d'essuie-glace pour pare-brise selon l'une quelconque des revendications 2 à 5 dans lequel, lorsque l'on déplace le moyen de choix vers sa deuxième position, le mouvement de rotation de l'ensemble (18) de lame cesse à une position optimale de l'ensemble de lame par rapport à l'ensemble porteur (6) pour nettoyer le pare-brise en va-et-vient.

7. Un véhicule comprenant un ensemble d'essuie-glace pour pare-brise selon l'une quelconque des précédentes revendications.

8. Un véhicule selon la revendication 7 comprenant deux tels ensembles d'essuie-glace, les ensembles de lame étant entraînés de façon synchrone lorsque le moyen de choix se trouve dans sa troisième position.

9. Un procédé de mise en œuvre de l'ensemble d'essuie-glace pour pare-brise du véhicule impliquant l'utilisation d'un ensemble d'essuie-glace pour pare-brise selon l'une quelconque des revendications 1 à 6, dans lequel le mécanisme d'entraînement est utilisé pour provoquer le mouvement classique en va-et-vient de l'ensemble d'essuie-glace en cas de pluie modérément forté, et en ce que, dans des conditions de fortes pluies, le va-et-vient de l'ensemble d'essuie-glace cesse, et le déplacement en rotation de l'ensemble (18) d'essuie-glace commence.